# EUROPÄISCHE PATENTSCHRIFT

(11) **EP 3 875 857 B1**
(45) Veröffentlichungstag und Bekanntmachung des Hinweises auf die Patenterteilung: **28.09.2022**
(21) Anmeldenummer: 21150373.5
(22) Anmeldetag: 06.01.2021
(51) Int. Cl.: F24C 15/00, G02B 6/00, F21V 8/00

(54) **GARGERÄTELEUCHTE MIT FORMSCHLÜSSIG GEHALTENEM LICHTLEITSTAB**
COOKING APPLIANCE LIGHT WITH A FORM-FITTED LIGHT GUIDE ROD
LUMINAIRE D'APPAREIL DE CUISSON POURVU D'UNE TIGE GUIDE LUMIÈRE

(30) Priorität: 03.03.2020 DE 102020105708; 03.03.2020 DE 202020101175 U; 03.03.2020 DE 202020101176 U
(43) Veröffentlichungstag der Anmeldung: 08.09.2021
(73) Patentinhaber: BJB GmbH & Co. KG, 59755 Arnsberg (DE)
(72) Erfinder: Henrici, Philipp, 59755 Arnsberg (DE); Baumeister, Olaf, 59846 Sundern (DE); Welslau, Frank, 59757 Arnsberg (DE)
(74) Vertreter: Ostriga Sonnet Wirths & Vorwerk

(56) Entgegenhaltungen:
- CN-U- 206 802 854
- DE-A1-102016 116 446
- DE-U1-202015 104 575
- DE-U1-202019 106 169

## Beschreibung

Oberbegriffs des Anspruchs 1.

Derartige Gargeräteleuchten sind aus dem Stand der Technik in vielfältiger Form bekannt. Als Beispiel kann die DE 10 2018 111 092 A1 dienen. Hier wird ein Lichtleitstab von einem Träger in einem Aufnahmestutzen gehalten und tritt einseitig aus dem Ausnahmestutzen aus. Auf der der Austrittsseite des Lichtleitstabes gegenüberliegenden Aufnahme des Trägers ist eine LED-Platine angeordnet. Die LED ist im Bereich einer Lichteinspeisefläche des Lichtleitstabes positioniert. Ein Kühlkörper ist darüber hinaus mit dem Träger gekoppelt, um die Betriebswärme der LED aufzunehmen und an die Umgebung abzuführen.

In der DE 10 2018 111 092 A1 ist der Aufnahmestutzen zylindrisch ausgebildet und umgibt einen Längsabschnitt des Lichtleitstabes. Der Aufnahmestutzen ist in Axialrichtung geschlitzt ausgeführt und von einem Klemmring umschlossen. Dieser Klemmring baut eine Klemmspannung auf, die die Wandung des Aufnahmestutzens gegen den Lichtleitstab presst und den Lichtleitstab so kraftschlüssig im Träger hält.

Auch wenn die Festlegung des Lichtleitstabes im Träger den Anforderungen genügt, ist die Montage des Klemmringes ausgesprochen aufwändig. Dieser muss nach dem Einschieben des Lichtleitstabes in den Aufnahmestutzen über das freie Lichtleitstabende auf den Aufnahmestutzen aufgeschoben werden. Um Klemmkräfte aufzubringen, muss hierbei der Klemmring entgegen einer Federvorspannung geweitet werden. Selbst wenn der Aufnahmestutzen außenumfänglich zur Verringerung von Reibkräften mit Stegen versehen ist, die ihrerseits Schrägflächen zum vereinfachten Aufsetzen des Klemmringes aufweisen, sind die aufzubringenden Montagekräfte immer noch vergleichsweise hoch. Darüber hinaus müssen die Kanten des Klemmringes bearbeitet sein, damit dieser üblicherweise aus Federstahl gefertigte Ring nicht den gewöhnlich aus Kunststoff gefertigten Aufnahmestutzen schädigt.

Die DE 20 2015 104 575 U1 der Anmelderin zeigt eine Hausgeräteleuchte, bei welcher der Lichtleitstab in ein Trägergehäuse eingerastet ist. Hierzu bildet das Gehäuse Rastarme aus, die Rastnuten auf Seiten des Lichtleitstabes eingreifen.

Aus der DE 10 2016 116 446 A1 der Anmelderin ist eine Gargeräteleuchte bekannt, deren Lichtleitstab mit einschnitten versehen ist. In diese greifen Haltearme eines Gehäuses ein.

Aufgabe der Erfindung ist es, eine gattungsgemäße Gargeräteleuchte mit einer vereinfachten Lichtleitstabmontage bereitzustellen.

Gelöst wird die Aufgabe von einer Gargeräteleuchte mit den Merkmalen des Anspruches 1, insbesondere mit dessen kennzeichnenden Merkmalen, wonach der Aufnahmestutzen für den Lichtleitstab in seiner Umfangswand eine Durchbrechung aufweist und das Halteteil von einem außenumfänglich auf den Aufnahmestutzen aufsetzbaren Federstecker mit wenigstens einem Halteschenkel gebildet ist, der in den mit der Durchbrechung ausgerichteten Umfangsfreischnitt des Lichtleitstabes eingreift.

Eine Formschlussverbindung hat gegenüber der aus dem Stand der Technik bekannten Kraftschlussverbindung durch einen Klemmring im Wesentlichen den Vorteil einer einfachen und im Wesentlichen kraftfreien Montage. Der besondere Vorteil der Erfindung ist ein kraftloses Einsetzen des Lichtleitstabes in den Aufnahmestutzen. Erst durch nachgelagertes Aufsetzen des Federsteckers erfolgt die mechanische, formschlüssige Festlegung des Lichtleitstabes und auch ggf. seine Ausrichtung.

Diese Lösung bietet ein widerstandfreies Einschieben des Lichtleitstabes in den Aufnahmestutzen, wo eine besonders kraftminimierte Montage erforderlich ist. Eine Beschädigung des Lichtleitstabes durch das Halteteil während des Einschiebens des Lichtleitstabes in den Aufnahmestutzen ist ausgeschlossen. Insofern bietet sich eine solche Variante beispielsweise für einen Träger mit metallischem Aufnahmestutzen an.

Nach einer bevorzugten Ausführungsform ist der Umfangsfreischnitt des Lichtleitstabes mit Axialabstand zur einer der Lichteinleitung dienenden Stirnfläche des Lichtleitstabes angeordnet. Weitere Merkmale der Erfindung sowie deren sonstige Vorteile werden nunmehr anhand zweier Ausführungsbeispiele beschrieben. Es zeigen:
- Fig. 1:: die Explosionsansicht einer nicht erfindungsgemäßen Gargeräteleuchte,
- Fig. 2:: eine Ausschnittsvergrößerung gemäß Ausschnittskreis Z in Fig. 1,
- Fig. 3:: die zusammengesetzte Gargeräteleuchte gemäß Fig. 1 in Seitenansicht,
- Fig. 4:: eine Schnittdarstellung der Gargeräteleuchte gemäß Schnittlinie A-A in Fig. 3,
- Fig. 5:: eine Schnittdarstellung der Gargeräteleuchte gemäß Schnittlinie B-B in Fig. 3,
- Fig. 6:: die Explosionsdarstellung einer Gargeräteleuchte gemäß der Erfindung,
- Fig. 7:: eine Ausschnittsvergrößerung gemäß Ausschnittskreis X in Fig. 6,
- Fig. 8:: die zusammengesetzte Gargeräteleuchte gemäß Fig. 6 in Seitenansicht,
- Fig. 9:: eine Schnittdarstellung der Gargeräteleuchte gemäß Schnittlinie C-C in Fig. 8,
- Fig. 10:: eine Schnittdarstellung der Gargeräteleuchte gemäß Schnittlinie D-D in Fig. 8.

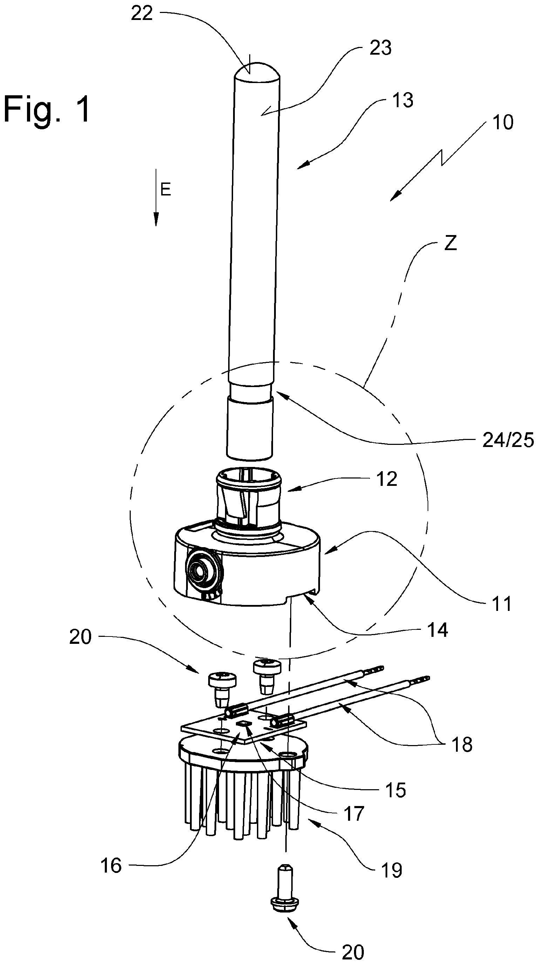

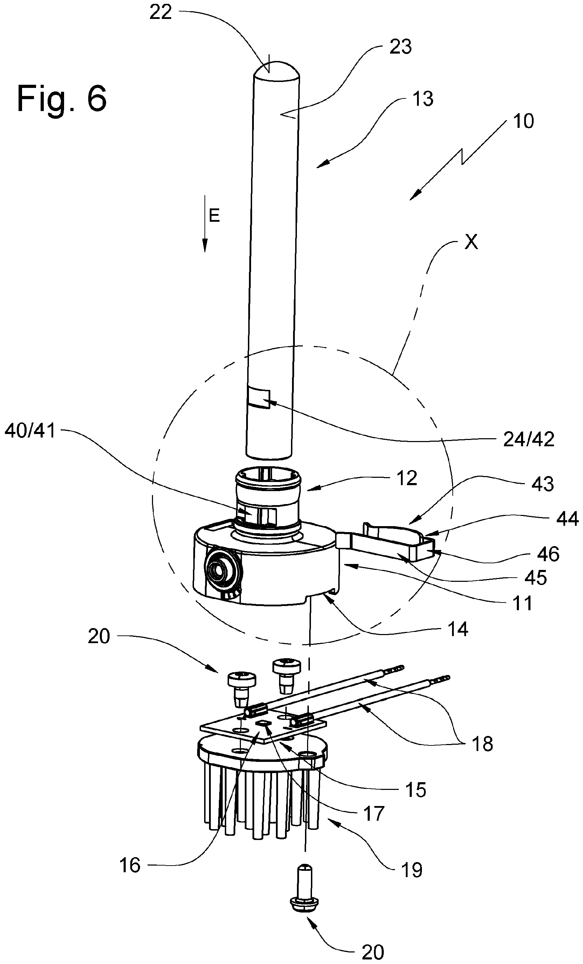

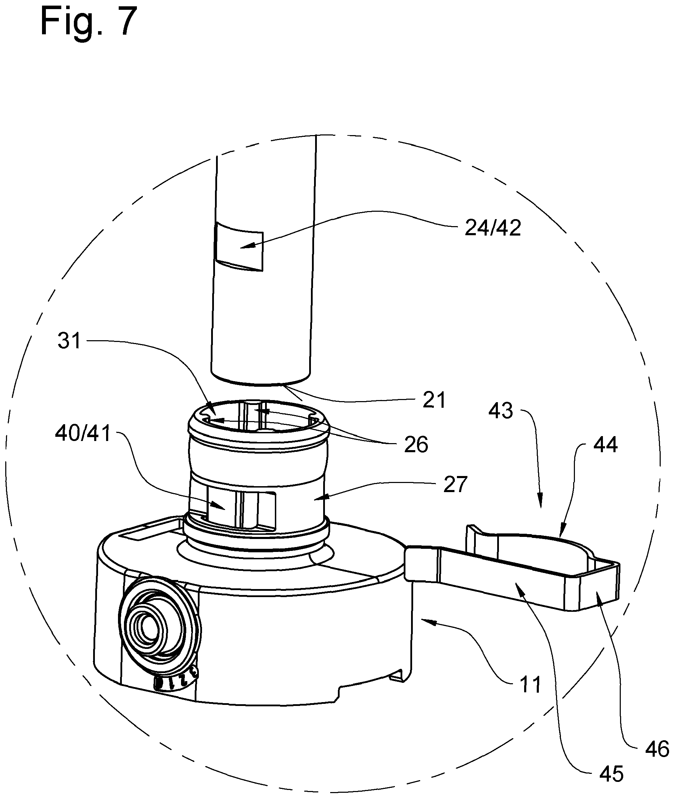

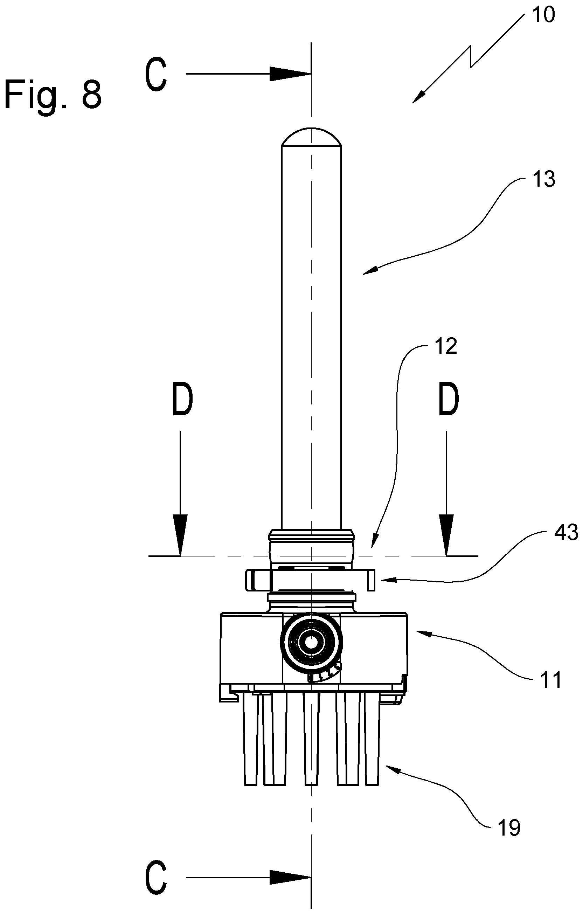

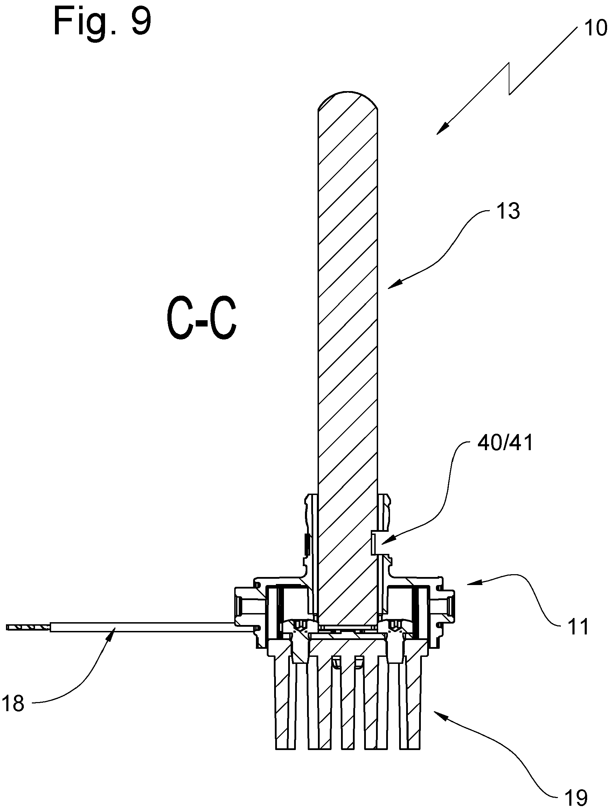

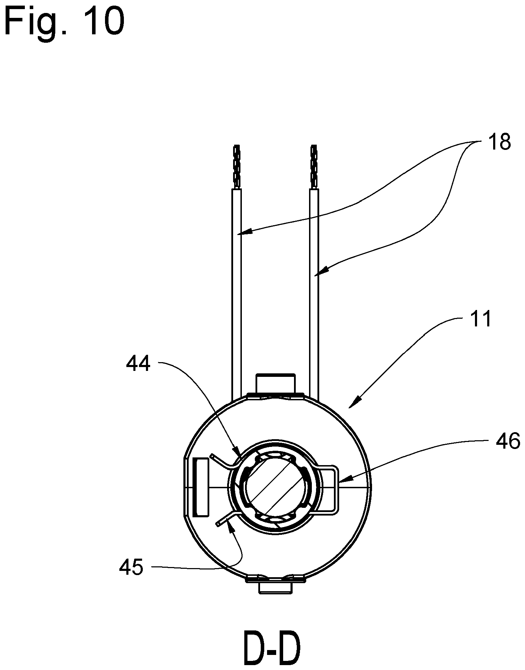

In den Figuren 1 bis 5 ist eine nicht erfindungsgemäße Gargeräteleuchte 10 dargestellt, in den Figuren 6 bis 10 ist eine Ausführungsform einer erfindungsgemäßen Gargeräteleuchte dargestellt. Soweit beide Ausführungsformen identische oder analoge Bauteile aufweisen, werden im Folgenden gleiche Bezugsziffern verwendet. Soweit sich die Ausführungsformen unterscheiden, werden unterschiedliche Bezugszeichen verwendet und abweichende Funktionen separat erläutert. Die insgesamt mit der Bezugsziffer 10 versehene Gargeräteleuchte des ersten Ausführungsbeispiels wird nunmehr anhand der Figuren 1 bis 5 beschrieben.

In der in Fig. 1 dargestellten Explosionsansicht der Gargeräteleuchte 10 sind deren wesentliche Einzelkomponenten dargestellt.

Die Gargeräteleuchte 10 umfasst zunächst einen Träger 11, der in der Regel aus Kunststoff hergestellt ist, jedoch auch aus einem anderen Material bestehen kann. Der Träger 11 verfügt über einen Aufnahmestutzen 12, in welchem ein zylindrischer Lichtleitstab 13 in Einschubrichtung E eingesetzt wird. Hierzu verfügt der Aufnahmestutzen 12 über eine Lichtstabeintrittsöffnung 31, die an einer einer Leuchtmittelaufnahme 14 abgewandten Seite des Aufnahmestutzens angeordnet ist.

Auf der dem Aufnahmestutzen 12 abgewandten Seite bildet der Träger 11 eine Leuchtmittelaufnahme 14 aus, bei der es sich hier um eine einseitig offene Aufnahmeschale handelt.

Die Leuchtmittelaufnahme 14 trägt ein Leuchtmittel 15, welches hier aus einer Platine 16 besteht, auf welcher zumindest eine LED 17 angeordnet ist, die über Anschlussleiter 18 mit Elektrizität versorgt wird.

Die Platine 16 ist auf einem Kühlkörper 19 befestigt. Hierzu können geeignete Befestigungsmittel 20 gewählt werden. Beispielsweise können hier Schraubbolzen gewählt werden. Bevorzugt sind jedoch Steckrastmittel, die eine schraubenlose Montage der Platine 16 auf dem Kühlkörper 19 erlauben.

Die Einheit aus Leuchtmittel 15 und Kühlkörper 19 wird in die Leuchtmittelaufnahme 14 des Trägers 11 eingesetzt und dort ebenfalls mit geeignetem Befestigungsmittel 20 festgelegt. Auch hier ist neben Schraubbolzen ein Steckrastmittel bevorzugt. Es ist jedoch auch denkbar, dass der Träger 11 selbst Rastmittel, beispielsweise in Form von Rastvorsprüngen oder Rasthaken ausbildet, welche mit Rastvorsprüngen des Leuchtmittels 15 oder des Kühlkörpers 19 zur Festlegung in der Leuchtmittelaufnahme 14 zusammenwirken.

Der Lichtleitstab 13 ist im vorliegenden Ausführungsbeispiel kreiszylindrisch und weist an seinem dem Träger 11 zugewandten Ende eine Lichteinspeisefläche 21 auf, die den Zylinderboden bildet. Auf der der Lichteinspeisefläche 21 abgewandten Seite bildet die Zylinderdecke eine Lichtaustrittfläche 22 aus, deren Oberfläche sphärisch gekrümmt ist, um das Licht breit zu streuen.

Es sind Varianten von Lichtleitstäben 13 bekannt, bei welchen das Licht seitlich aus der Mantelfläche ausgeführt wird. Die Frage des Lichtaustritts spielt für den Kerngedanken der Erfindung eine untergeordnete Rolle. Auch ist es nicht erforderlich, dass der Lichtleitstab 13 eine kreiszylindrische Kontur hat. Andere Konturen sind je nach konkretem Anwendungszweck der Gargeräteleuchte vorstellbar.

Die Zylindermantelfläche 23, im Folgenden auch Umfangsfläche genannt, weist einen Freischnitt 24, im Folgenden auch Umfangsfreischnitt genannt, auf. In der hier vorliegenden ersten Ausführungsform handelt es sich um eine Ringnut 25.

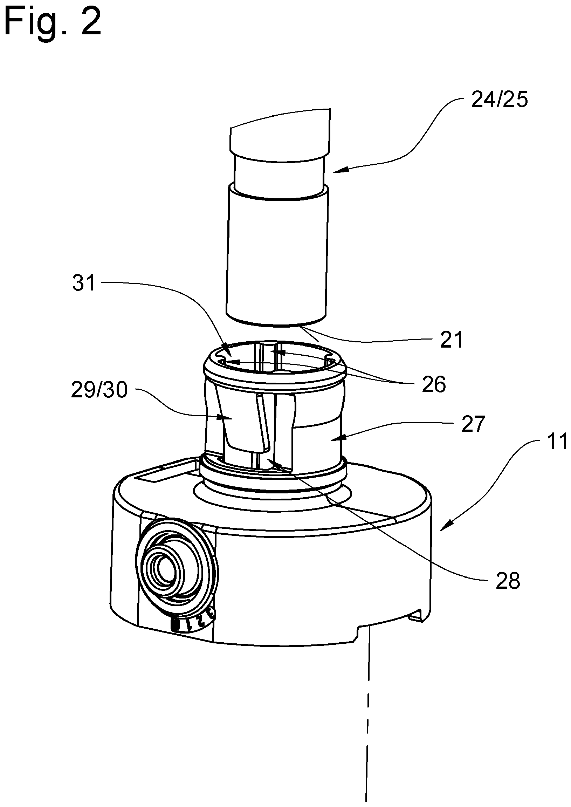

Wie aus den Figuren 1 und 2 hervorgeht, ist der Freischnitt 24 von der Lichteinspeisefläche 21 beabstandet angeordnet. Infolgedessen steht für die Lichteinspeisefläche 21 der volle Querschnitt des zylindrischen Lichtleitstabes 13 zur Verfügung. Die Querschnittsverminderung, hervorgerufen durch den Umfangsfreischnitt 24, ist zur Lichteinspeisefläche 21 beabstandet. Diese Konstruktion hat den wesentlichen Vorteil, dass für die Lichteinspeisung in den Lichtleitstab 13 eine große Lichteinspeisefläche 21 zur Verfügung steht und die eingespeiste Lichtmenge nicht durch eine Querschnittsverringerung des Lichtleitstabes 13 im Bereich der Lichteinspeisefläche 21 vermindert ist.

Insbesondere aus Fig. 2 geht hervor, dass der Aufnahmestutzen 12 ein hohlzylindrischer Körper ist, dessen Innenwand Zentrierrippen 26 trägt. Die Mantelwand 27 des Aufnahmestutzens 12 ist mit einem in etwa U-förmigen Einschnitt 28 versehen. Auf diese Weise bildet die Mantelwand 27 ein Halteteil in Form einer Rastfeder 29 bzw. Haltelasche 30 aus, deren Wurzel nahe der Lichtstabeintrittsöffnung 31 des Aufnahmestutzens 12 befindlich ist. die Lichtstabeintrittsöffnung 31 ist leuchtmittelfern bzw. am der Leuchtmittelaufnahme abgewandten Ende des Aufnahmestutzens a12 angeordnet. Im Ausführungsbeispiel gemäß Fig. 2 ist die Rastfeder 29 nach innen in Richtung hohlzylindrischem Aufnahmeraum des Aufnahmestutzens 12 ausgestellt und ragt somit in die Bewegungsbahn des Lichtleitstabes 13 hinein, auf welcher der Lichtleitstab 13 in Einschubrichtung E in den Aufnahmestutzen 12 eingebracht wird.

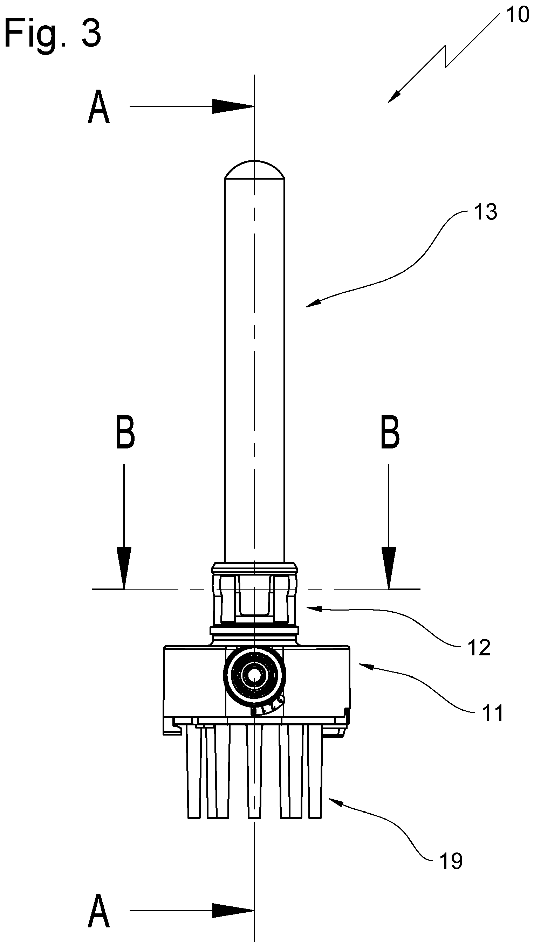

Fig. 3 zeigt nunmehr die Gargeräteleuchte 10 gemäß Fig. 1 in zusammengesetztem Zustand. Der Lichtleitstab 13 sitzt im Aufnahmestutzen 12 des Trägers 11 ein. Die Einheit aus Leuchtmittel 15 und Kühlkörper 19 ist in der Leuchtmittelaufnahme 14 festgelegt.

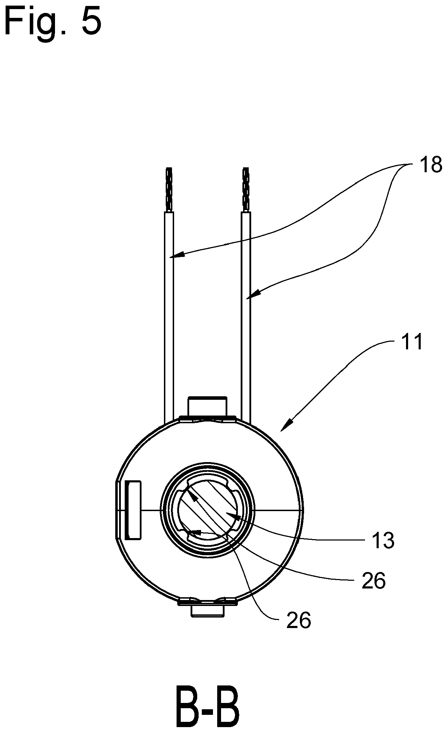

Die Fig. 5 als Schnittansicht gemäß Schnittlinie B-B in Fig. 3 zeigt den hohlzylindrischen Aufnahmestutzen 12 mit seinen Zentrierrippen 26, welche den Lichtleitstab 13 zentriert im Aufnahmestutzen 12 halten.

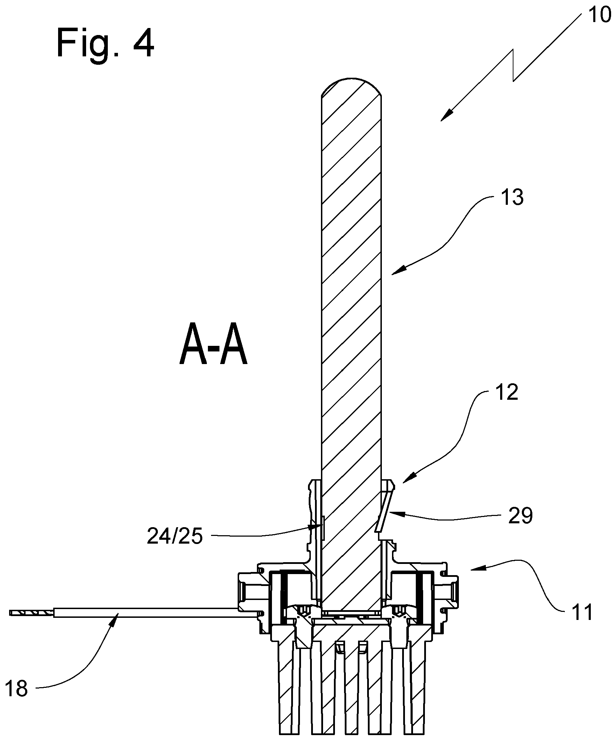

Anhand der Fig. 4, einer Schnittdarstellung gemäß Schnittlinie A-A in Fig. 3, wird die Festlegung des Lichtleitstabes 13 im Träger 11 besonders deutlich. Der Schnittdarstellung ist zu entnehmen, wie die Rastfeder 29 des Aufnahmestutzens 12 in den Umfangsfreischnitt 24 des Lichtleitstabes 13, hier ausgebildet als Ringnut 25, eingreift. Die freie Kante der Rastfeder 29 liegt an der leuchtmittelnahen Nutwand an und wirkt so gegen eine der Einschubrichtung E entgegenwirkende Auszugskraft.

Beim Einsetzen des Lichtleitstabes 13 in den hohlzylindrischen Aufnahmeraum des Aufnahmestutzens 12 wird die in die Bewegungsbahn des Lichtleitstabes hineinragende Rastfeder 29 aus ihrer Ruhelage ausgelenkt und gleitet zunächst an der Zylindermantelfläche 23 des Lichtleitstabes 13 entlang. Sie rutscht dann bei Erreichen der Ringnut 25 in selbige ein, was bei händischer Montage für den Monteur haptisch spürbar ist, so dass dieser um die erreichte Befestigungslage des Lichtleitstabes 13 weiß und den Montagevorgang beendet.

Bei einer maschinellen Montage ist der zurückzulegende Montageweg des Lichtleitstabes 13 in Einschubrichtung E vordefiniert, so dass das Montagewerkzeug die entsprechende Einschubbewegung vollführen kann.

Es ist denkbar, dass der Lichtleitstab 13 und der Träger 11 mit korrespondierenden Ausrichtkonturen versehen sind. Auf diese Weise lässt sich eine definierte Ausrichtung des Lichtleitstabes 13 in Hinblick auf eine Rotation um dessen Längsmittelachse erreichen. Am einfachsten lassen sich solche Ausrichtkonturen beim Ausführungsbeispiel gemäß den Figuren 1 bis 5 durch Ausrichtkanten bzw. Ausrichtflächen verwirklichen.

So kann die Ringnut 25 beispielsweise in einem Abschnitt eine ungekrümmte, ebene Fläche aufweisen, in welcher eine geradlinige Kante des freien Endes der Rastfeder 29 zur Anlage kommt und so eine definierte Ausrichtung sicherstellt.

Ebenso ist es denkbar, statt einer Ringnut lediglich einen Nutabschnitt in der Zylindermantelfläche 23 des Lichtleitstabes 13 vorzusehen, die in ihren Abmessungen mit der Rastfeder korrespondiert. Wenn die Rastfeder 29 in diesen Nutabschnitt eingreift, ist nicht nur die Befestigungslage des Lichtleitstabes 13 im Träger 11 erreicht. Gleichzeitig ist auch eine entsprechende Ausrichtung gewährleistet.

Anhand der Figuren 5 bis 10 wird nunmehr eine Ausführungsform der Erfindung beschrieben. Die dortige Gargeräteleuchte 10 entspricht in ihrem Aufbau und ihren Bestandteilen im Wesentlichen dem ersten Ausführungsbeispiel. Zur Vermeidung von Dopplungen wird auf dieser erfindungsgemäßen grundsätzliche Beschreibung der Gargeräteleuchte 10 gemäß dieser zweiten Ausführungsform verzichtet und auf die Beschreibung zur ersten nicht erfindungsgemäßen Ausführungsform in den Figuren 1 bis 5 verwiesen. Soweit die Zeichnungen gleiche Bezugszeichen tragen, stimmen die Bauteile in ihrer Funktion entsprechend überein.

Der Aufnahmestutzen 12 des Trägers 11 des zweiten Ausführungsbeispiels unterscheidet sich, wie insbesondere aus den Figuren 1 und 2 hervorgeht, geringfügig von dem ersten Ausführungsbeispiel. Er ist mit einer Durchbrechung 40 versehen, die eine Art Fenster 41 bildet und einen Zutritt in den hohlzylindrischen Aufnahmeraum des Aufnahmestutzens 12 für den Lichtleitstab 13 ermöglicht.

Der Lichtleitstab 13 verfügt über ein Umfangsfreischnitt 24 in Form eines Nuteinschnittes 42, der lediglich entlang eines kurzen Umfangsabschnittes verläuft. Er entspricht in seinen Abmessungen etwa denjenigen der Durchbrechung 40. Der Boden des Nuteinschnittes 42 ist eben und ungekrümmt gehalten.

Als Haltemittel dient hier nicht etwa eine Rastfeder 29 bzw. eine Haltelasche 30 wie im ersten Ausführungsbeispiel. Als Haltemittel des zweiten Ausführungsbeispiels wird ein Federstecker 43 genutzt, der im weitesten Sinne U-förmig gebogen ist. Der Federstecker 43 verfügt über einen Rastschenkel 44 und einen Halteschenkel 45, die über einen Kopfschenkel 46 miteinander verbunden sind. Die freien Enden von Rastschenkel 44 und Halteschenkel 45 sind nach außen hin aufgebogen.

Der Lichtleitstab 13 wird zunächst in Einschubrichtung E in den hohlzylindrischen Aufnahmestutzen 12 eingeschoben. Idealerweise wird der Umfangsfreischnitt 24 mit der Durchbrechung 40 bzw. dem Fenster 41 ausgerichtet, wobei dies zu diesem Zeitpunkt noch nicht zwingend erforderlich ist.

Nunmehr wird der Federstecker 43 außenumfänglich auf die Mantelwand 27 des Aufnahmestutzens 12 aufgeschoben. Die ausgestellten freien Enden von Rastschenkel 44 und Halteschenkel 45 erleichtern das Aufschieben des Federsteckers 43, dessen Schenkel 44, 45 sich unter Aufbau einer Federspannung spreizen. Der Rastschenkel 44 ist vorn kongruent zur Kontur der Mantelwand 27 des Aufnahmestutzens 12 gebogen, weist im vorliegenden Ausführungsbeispiel einen Abschnitt mit kreisbogenartiger Krümmung auf. In seiner Montagelage liegt dieser kreisbogenförmige Abschnitt des Rastschenkels 44 des Federsteckers 43 an der Außenumfangsfläche der Mantelwand 27 des Aufnahmestutzens 12 an und hält den Federstecker 43 am Aufnahmestutzen 12.

Der Halteschenkel 45 ist im Ausführungsbeispiel mit Ausnahme seines freien Endes ungekrümmt ausgeführt und liegt mit einem Teilabschnitt in der Durchbrechung 40 ein. Sofern noch nicht geschehen, ist nunmehr der Lichtleitstab 13 um seine Längsmittelachse im Aufnahmestutzen 12 zu drehen, um den Nuteinschnitt 42 mit der Durchbrechung 40 und mit dem dort einliegenden Halteschenkel 45 auszurichten. Der Halteschenkel 45 greift dann in den Nuteinschnitt 42 ein. Dessen ebene, ungekrümmte Bodenfläche liegt vollflächig an dem ungekrümmten Halteschenkel 45 an, so dass neben einer Halterung entgegen Einschubrichtung E auch eine definierte Ausrichtung des Lichtleitstabes 13 vorgegeben ist.

Eine weitere, nicht dargestellte und nicht erfindungsgemäße Ausführungsform einer formschlüssigen Festlegung des Lichtleitstabes 13 in dem Träger 11 kann beispielsweise durch einen Sicherungsring erfolgen. Hier könnte der Sicherungsring in einer Innenumfangsnut der Mantelwand 27 des Aufnahmestutzens 12 einliegen. Dieser Sicherungsring ist gegenüber dem Außenumfang des Lichtleitstabes 13 mit Untermaß gefertigt. Der Lichtleitstab 13 verfügt über einen Umfangsfreischnitt, in welchen der Sicherungsring eingreift, um den Lichtleitstab 13 im Träger 11 zu halten.

**Bezugszeichenliste**

| | | | |
|---|---|---|---|
| 10 | Gargeräteleuchte | | |
| 11 | Träger | | |
| 12 | Aufnahmestutzen | | |
| 13 | Lichtleitstab (zylindrisch) | | |
| 14 | Leuchtmittelaufnahme | | |
| 15 | Leuchtmittel | | |
| 16 | Platine | | |
| 17 | LED | | |
| 18 | Anschlussleiter | | |
| 19 | Kühlkörper | | |
| 20 | Befestigungsmittel | | |
| 21 | Lichteinspeisefläche / Zylinderboden | | |
| 22 | Lichtaustrittsfläche / Zylinderdecke | | |
| 23 | Zylindermantelfläche / Umfangsfläche | | |
| 24 | Freischnitt / Umfangsfreischnitt | | |
| 25 | Ringnut | | |
| 26 | Zentrierrippen | | |
| 27 | Mantelwand | | |
| 28 | Einschnitt | | |
| 29 | Rastfeder | | |
| 30 | Haltelasche | | |
| 31 | Lichtstabeintrittsöffnung | | |
| 40 | Durchbrechung | | |
| 41 | Fenster | | |
| 42 | Nuteinschnitt | | |
| 43 | Federstecker | | |
| 44 | Rastschenkel | | |
| 45 | Halteschenkel | | |
| 46 | Kopfschenkel | E | Einschubrichtung |

## Patentansprüche

1. Gargeräteleuchte (10),
- mit einem Träger (11), der eine Leuchtmittelaufnahme (14) ausbildet, in welchem ein Leuchtmittel (15) in Form einer Platine (16) mit zumindest einer LED einsitzt und einen Aufnahmestutzen (12) aufweist, der über eine Öffnung mit der Aufnahme für das Leuchtmittel (15) verbunden ist,
- mit einem Lichtleitstab (13), der in dem Aufnahmestutzen (12) einsitzt und in welchen das vom Leuchtmittel (15) emittierte Licht durch die Öffnung zwischen Aufnahmestutzen (12) und Leuchtmittelaufnahme (14) eingespeist wird, wobei der Lichtleitstab (13) mittels einer Formschlussverbindung im Träger (11) festgelegt ist, wobei
- die Formschlussverbindung von einem Halteteil auf Seiten des Trägers (11) und einem Umfangsfreischnitt (24) auf Seiten des Lichtleitstabes (13) gebildet ist, wobei das Halteteil zur Festlegung des Lichtleitstabes (13) am Träger in den Umfangsfreischnitt (24) eingreift, **dadurch gekennzeichnet, dass** der Aufnahmestutzen (12) für den Lichtleitstab (13) in seiner Umfangswand eine Durchbrechung (40) aufweist und das Halteteil von einem außenumfänglich auf den Aufnahmestutzen (12) aufsetzbaren Federstecker (43) mit wenigstens einem Halteschenkel (45) gebildet ist, der in den mit der Durchbrechung (40) ausgerichteten Umfangsfreischnitt (24) des Lichtleitstabes (13) eingreift.

2. Gargeräteleuchte (10) nach Anspruch 1, **dadurch gekennzeichnet, dass** der Umfangsfreischnitt (24) des Lichtleitstabes (13) mit Axialabstand zur einer der Lichteinleitung dienenden Stirnfläche des Lichtleitstabes (13) angeordnet ist.

## Claims

1. Cooking device light (10),
- having a bracket (11) that forms a light source receiver (14), in which a light source (15) in the form of a board (16) with at least one LED light sits, and which has a connecting piece (12) that is connected via an opening to the receiver for the light source (15),
- having a light guide rod (13), which sits in the connecting piece (12) and in which the light from the light source (15) is fed through the opening between the connecting piece (12) and the light source receiver (14), wherein the light guide rod (13) is fixed in the bracket (11) by means of a tightly fitting connection, wherein
- the tightly fitting connection is formed by a holding part on the side of the bracket (11) and a peripheral indent (24) on the side of the light guide rod (13), wherein the holding part engages in the peripheral indent (24) to fix the light guide rod (13) on the bracket, **characterised in that** the connecting piece (12) for the light guide rod (13) has a hole (40) in its surrounding wall, and the holding part is formed by an R-pin (43), which can be placed on the connecting piece (12) on the outer periphery, having at least one holding shank (45), which engages in the peripheral indent (24), which is aligned with the hole (40), of the light guide rod (13).

2. Cooking device light (10) according to claim 1, **characterised in that** the peripheral indent (24) of the light guide rod (13) is arranged with axial distance to a front face of the light guide rod (13), which serves to introduce light.

## Revendications

1. Lampe d'appareil de cuisson (10),
- avec un support (11) qui constitue un réceptacle de moyen d'éclairage (14) dans lequel un moyen d'éclairage (15), de la forme d'une platine (16), doté d'au moins une LED est installé et présente une douille de réception (12) qui est reliée par une ouverture avec le réceptacle destiné au moyen d'éclairage (15),
- avec un guide de lumière (13) qui est inséré dans la douille de réception (12) et dans lequel la lumière émise par le moyen d'éclairage (15) est injectée à travers l'ouverture entre la douille de réception (12) et le réceptacle de moyen d'éclairage (14), le guide de lumière (13) étant fixé au moyen d'une liaison d'assemblage de formes dans le support (11),
- dans lequel la liaison d'assemblage de formes est formée par une pièce de maintien du côté du support (11) et une échancrure périphérique (24) du côté du guide de lumière (13), la pièce de maintien pénétrant pour la fixation du guide de lumière (13) sur le support dans l'échancrure périphérique (24),
**caractérisée en ce que** la douille de réception (12) présente pour le guide de lumière (13) une brèche (40) dans sa paroi périphérique et que la pièce de maintien est formée par une goupille à ressort (43), avec au moins un bras de maintien (45), pouvant être posée sur la périphérie extérieure de la douille de réception (12), qui pénètre dans l'échancrure périphérique (24) du guide de lumière (13) alignée avec la brèche (40).

2. Lampe d'appareil de cuisson (10) selon la revendication 1, **caractérisée en ce que** la découpe périphérique (24) du guide de lumière (13) est agencée à une distance axiale d'une surface frontale du guide de lumière (13) servant à l'introduction de la lumière.
